# EUROPÄISCHE PATENTSCHRIFT

(11) **EP 1 559 915 B1**
(45) Veröffentlichungstag und Bekanntmachung des Hinweises auf die Patenterteilung: **16.05.2007**
(21) Anmeldenummer: 04001873.1
(22) Anmeldetag: 29.01.2004
(51) Int. Cl.: F04D 19/04, F04D 29/04, F16C 32/06

(54) **Gasreibungspumpe**
Gas friction pump
Pompe à effet visqueux

(43) Veröffentlichungstag der Anmeldung: 03.08.2005
(73) Patentinhaber: Pfeiffer Vacuum GmbH, 35614 Asslar (DE)
(72) Erfinder: Conrad, Armin, 35745 Herborn (DE); Stanzel, Jörg, 35583 Wetzlar (DE)

(56) Entgegenhaltungen:
- WO-A-99/20433
- DE-A- 2 255 618
- DE-A- 19 915 983
- FR-A- 2 602 834

## Beschreibung

Die Erfindung betrifft eine Gasreibungspumpe nach dem Oberbegriff des ersten Anspruchs.

Gasreibungspumpen, insbesondere Turbomolekularpumpen, sind in vielen Anwendungsfällen, bei denen es um das Erreichen eines niedrigen Endvakuumdrucks geht, sehr erfolgreich.
Der Begriff Turbomolekularpumpe leitet sich aus der Ähnlichkeit zu Turbinen ab, d.h. Schaufelkränze sitzen abwechselnd auf Rotor und Stator. Die Pumpwirkung entsteht durch Zusammenwirken von Rotor und Stator und nimmt mit steigender Drehzahl des Rotors zu.
Es gibt verschiedene Konzepte, diese Rotoren aufzubauen und zu lagern. In einer Variante sitzt die pumpaktive Struktur des Rotors auf einem Ende der Welle. Hergestellt werden kann diese Struktur beispielsweise aus Scheiben, in die Flügel gefräst werden und die anschließend auf die Welle aufgeschrumpft werden. Dadurch entsteht ein Scheibenpaket an einem Ende der Welle. Unterhalb dieses Scheibenpakets wird die Welle dann an zwei Punkten gelagert und mit einem Motor versehen, oftmals sitzt dieser zwischen den Lagerpunkten. Diese Art Lagerung bezeichnet man als fliegende Lagerung, der Schwerpunkt des Rotors liegt außerhalb der Lagerpunkte.
Eine andere Variante ist, den Rotor einstückig aus Vollmaterial herauszufräsen und innen hohl zu gestalten. Diese "Glocke" wird dann über Lagervorrichtung und Motor gestülpt und mit einer darin befindlichen Welle verschraubt. Bei dieser Konstruktion liegt der Schwerpunkt des Rotors nahe am oder im oberen Lager der Welle.

Bei beiden Konstruktionen, insbesondere aber bei der fliegenden Lagerung, sind im oberen Lager wirkenden Kräfte hoch. Die dort eingesetzten Lager müssen also eine hohe Steifigkeit aufweisen.
Die einfachste Variante der Lagerung sind Kugellager. Durch die hohen Kräfte und Umlaufgeschwindigkeiten im oberen Lager ist ein Ölschmierung und -kühlung unabdingbar. Trotzdem ist die Lebensdauer der Kugellager begrenzt und ein Austausch muss in regelmäßigen Intervallen stattfinden.

Bedingt durch den Aufbau der Pumpe liegt das Kugellager des oberen, näher am Rotorschwerpunkt gelegenen Lagers sehr tief im Inneren der Pumpe. Damit sind sowohl die Ölversorgung schwierig als auch der Austausch aufwändig.
Ein weiteres Problem sind Kohlenwasserstoffdämpfe, die aus dem Öl des Kugellagers austreten. Diese werden zwar während des Laufens der Pumpe prinzipbedingt effektiv mitabgepumpt, bei Stillstand der Pumpe können sie jedoch in den abzupumpenden Rezipienten gelangen. Gerade beim Einsatz in der Herstellung von Halbleitern ist dies nicht wünschenswert.
Im Stand der Technik ist es bekannt, insbesondere das Kugellager im oberen Lager durch ein magnetisches Lager zu ersetzen. Um die geforderte hohe Steifigkeit zu erzielen, ist in der Regel ein aktives magnetisches Radiallager notwendig. Der technische Aufwand eines solchen Lagers ist hoch: zunächst werden Elektromagneten benötigt, die eine variable Positionierung (gesteuert durch den Strom) erlauben. Zusätzlich bedarf es Positionssensoren, die die Lage des Rotors feststellen und diese als Eingangssignal an eine Regelelektronik geben. Diese steuert den Strom, mit dem die Elektromagneten betrieben werden. Mit zunehmender Steifigkeit des Lagers, steigen die einzusetzenden Ströme an. Es entsteht zusätzliche Wärme, die es abzuführen gilt. Der verglichen mit Kugellagern deutlich höhere technischen Aufwand bedingt einen höheren Fertigungspreis, den man für die besseren Wartungs- und Lagereigenschaften in Kauf nehmen muss.
In einigen Anwendungsbereichen, z.B. der Hableiterindustrie, haben sich die magnetisch gelagerten Pumpen durchgesetzt. Bezeichnet man als konventionelle Lager diejenigen Lager, die in großen Stückzahlen verbaut werden und seit Jahren auf dem Markt etabliert sind, müssen die magnetischen Lagerungen hinzu gezählt werden.
Ein anderer Weg wurde bereits 1973 in der Offenlegungsschrift DE-OS 22 55 618 vorgestellt. Diese Veröffentlichung lehrt den Einsatz von Gaslagern in Turbomolekularpumpen, wobei alle Freiheitsgrade (außer dem der Rotation) durch die Gaslager unterstützt werden. Eine hohe Steifigkeit erzielt man bei Gaslagern nur, wenn die Spalte zwischen Welle und Stator des Lagers sehr klein sind. Mit diesem Merkmal, der Verringerung der Spalte, stößt man jedoch sehr schnell an Grenzen, besonders wenn es um die Präzision bei der Montage von Stator- und Rotorteilen geht. Da zum Beispiel bei der Verwendung von zwei in einem gewissen Abstand voneinander angebrachten Radiallagern die geringste Abweichung der Zentrierung in einem der Lager eine unzulässige Veränderung der äußerst engen Spalte im jeweils anderen Lager hervorruft, ist es äußerst schwierig, wenn nicht nahezu unmöglich, die notwendigen hochpräzisen Einstellungen vorzunehmen. An der Lösung dieses Problems wurde gearbeitet, beispielsweise durch eine geeignete Aufhängung der Lagereinheit im Pumpengehäuse wie in DE-OS 199 15 983 offenbart. Die verfolgten Ansätze mündeten aber bisher nicht in kommerziell erfolgreichen gasgelagerten Turbomolekularpumpen.

Die FR-A2 602 834 betrifft eine vollständig gasgelagerte Turbomolekularpumpe und befasst sich mit dem Problem, dass Betriebsgas der Gaslager auf unschädliche Weise aus der Pumpe abzuführen. Es wird vorgeschlagen, zwischen Gaslager und Pumpsystem eine dynamische Dichtung und zwischen dieser und dem Gaslager eine Auslass für das Betriebsgas vorzusehen. Die WO 99/20433 stellt unter gasgelagerte Turbomolekularpumpen vor. Es wird vorgeschlagen, wenigstens einen Teil der Lager in einem an das Pumpengehäuse angeflanschtes Gehäuse unterzubringen.

Aufgabe der Erfindung ist es, eine Gasreibungspumpe mit fliegend gelagertem oder glockenförmigem Rotor zu bauen, die eine wartungsfreundliche Konstruktion besitzt und bei der das näher am Schwerpunkt des Rotors gelegene Lager eine hohe Steifigkeit aufweist.
Die Konstruktion soll das Problem der hochpräzisen Zentrierung lösen.

Die Aufgabe wird gelöst durch die Merkmale des ersten Anspruchs.

Eine Gasreibungspumpe mit glockenförmigem oder fliegend gelagertem Rotor hält den hohen Belastungen im näher am Schwerpunkt gelegenen Lager besser stand, wenn an dieser Stelle ein Gaslager verwendet wird. Gaslager besitzen eine hohe Steifigkeit und können auch bei den geforderten hohen Drehzahlen betrieben werden. Sie sind nur in sehr geringem Maße verschleißanfällig, verlängern damit die Wartungsintervalle und reduzieren folglich die Kosten erheblich. Durch die Verwendung nur eines radialen Gaslagers wird die Notwendigkeit der hochpräzisen Zentrierung der Lagerpunkte vermieden. Zum anderen wird durch die Bauweise nach den Ansprüchen 3 bis 6 diese hochpräzise Zentrierung und damit die Verwendung weiterer Gaslager möglich. Zur Umsetzung der Erfindung können alle Arten von Gaslager eingesetzt werden, insbesondere aerodynamische und aerostatische Lager.

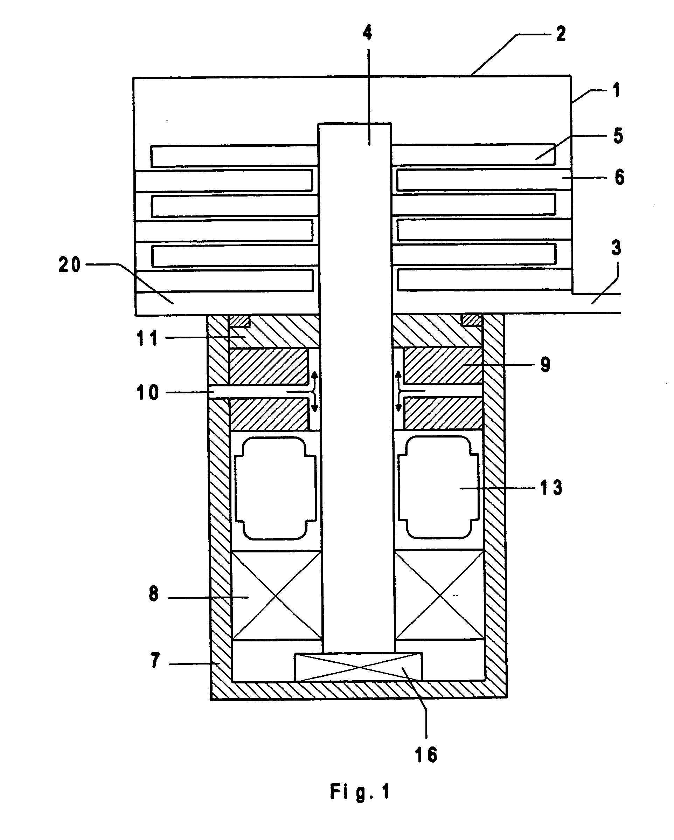

Anhand der einzigen Abbildung soll die vorliegende Erfindung erläutert und weitere vorteilhafte Ausgestaltungen vorgestellt werden. Die Abbildung zeigt das Beispiel einer Turbomolekularpumpe mit fliegend gelagertem Rotor. In dem Pumpengehäuse 1 mit Ansaugflansch 2 und Ausstoßöffnung 3 sind die feststehenden pumpaktiven Bauteile als Statorscheiben 6 montiert. Die rotierenden pumpaktiven Bauteile sind als Rotorscheiben 5 mit der Rotorwelle 4 fest verbunden. Diese wird durch eine Antriebseinrichtung 13 in Rotation versetzt.

In einem zylindrischen Gehäuseteil 7 befinden sich neben der Antriebseinrichtung eine untere radiale Lagereinheit 8 und eine obere radiale Lagereinheit 9 zur Unterstützung der Rotorwelle. Ein Lager 16 unterstützt die Rotorwelle in axialer Richtung. Im gezeigten Beispiel ist es am unteren Ende der Rotorwelle platziert, dieses axiale Lager kann sich aber auch an anderer Stelle befinden, beispielsweise nahe dem oberen Radiallager 9. Zwischen der oberen Lagereinheit und dem Gasauslassbereich 20 sind Dichtungsmittel 11 vorhanden. Die obere Lagereinheit ist als Gaslager ausgebildet und wird über eine Gaszuführung 10 mit Gas versorgt. Diese obere Lagereinheit sitzt von beiden Lagereinheiten dem Schwerpunkt des Rotors am nächsten und muss den größten Lagerkräften standhalten. Bei fliegender Lagerung sind dies dynamische Kräfte, doch auch bei glockenförmigen Rotoren ist die Belastung hier am höchsten, insbesondere wenn die Pumpe nicht senkrecht eingebaut ist. Daher ist dieses Lager als Gaslager ausgebildet, welches eine hohe Steifigkeit besitzt. Gleichzeitig ist es prinzipbedingt sehr verschleißarm, weshalb die Wartungskosten durch bedeutend selteneren Lagerwechsel reduziert werden.
Die untere Lagereinheit kann ein ölgeschmiertes Kugellager oder ein sonstiges konventionelles Lager sein, da hier die Kräfte geringer sind. Ein Wechsel des Lagers ist an dieser Stelle weniger problematisch und damit weniger kostenaufwändig.
Aus Gaslagern strömt das Betriebsgas aus, welches den Gasfilm erzeugt, auf dem das zu lagernde Objekt schwebt. Dieses Gas darf nicht in den Bereich niedrigen Drucks gelangen und muss durch geeignete Dichtungsmittel 11 von Schöpfraum und Gasauslass 20 ferngehalten werden. Diese Dichtungsmittel können beispielsweise Labyrinthdichtungen oder Mittel zur Gasabsaugung zwischen Lager 9 und Gasauslass 20 sein.

In einer vorteilhaften Ausgestaltung ist die obere Lagereinheit mit dem Gaslager als Modul ausgebildet, wobei hierunter eine Baueinheit zu verstehen ist, die aller notwendigen Bauteile des Lager enthält. Dieses Modul wird dann in einen zylindrischen Teil des Gehäuses eingebracht und dort fixiert. Hierdurch kann das Gaslager als eigene Einheit hergestellt werden. Die Herstellung solcher Gaslager mit kleinen Spaltmaßen und lasergebohrten Löchern ist fehleranfällig. Sollte bei der Herstellung ein Lagermodul nicht den notwendigen Standards entsprechen, wird es einfach nicht verbaut. Ohne die Verwendung der Modulbauweise ist ein deutlich größeres Teil der Pumpe betroffen und kann nicht mehr verwendet werden. Mit der Modulbauweise ist es also möglich, Produktionskosten einzusparen.

Denkt man dieses Prinzip weiter, gelangt man zu einer weiteren vorteilhaften Ausgestaltung der Erfindung. In dieser Ausgestaltung werden sämtliche Lagereinheiten 8, 10 und auch die Antriebseinrichtung 13 als Module ausgestaltet. Diese Module können separat hergestellt werden. Anschließend werden sie in einen zylindrischen Gehäuseteil eingeschoben und gesichert. Hierdurch ergibt sich ein sehr gutes Fluchten der einzelnen Lagerelemente und die Produktionskosten werden weiter gesenkt. Überdies wird die Pumpe noch wartungsfreundlicher. Weiterhin ist des denkbar, auf diese Art eine komplett mit axialen und radialen Gaslagern versehene Pumpe zu konstruieren, das Prinzip ist aber nicht darauf beschränkt. Auch passive oder aktive Magnetlager können, ebenso wie Kugellager, in ein eigenes Modul eingebaut werden, das dann mit den restlichen Modulen kombiniert wird. Denkbar ist auch, sämtliche Lagerbestandteile und den Motor zusammen zu fassen und in ein Modul zu integrieren, das in einem einzigen Arbeitsgang in die Pumpe eingebaut wird.

## Patentansprüche

1. Gasreibungspumpe mit feststehenden (6) und rotierenden (5), auf einer drehbaren Rotorwelle (4) fixierten, pumpaktiven Bauteilen, wobei die Rotorwelle (4) und die rotierenden pumpaktiven Bauteile (5) Bestandteile des Rotors sind und die Rotorwelle (4) durch zwei beabstandete Radiallager (8, 9), von denen eines näher am Schwerpunkt des Rotors als das andere angebracht ist, und einem Axiallager (16) unterstützt wird, **dadurch gekennzeichnet, dass** nur das Radiallager (9), welches sich näher am Schwerpunkt des Rotors befindet, ein Gaslager ist, während das weitere Radiallager (8) ein konventionelles Lager ist und die Lager in einem zylindrischen Teil (7) des Pumpengehäuses angeordnet sind.

2. Gasreibungspumpe nach Anspruch 1 **dadurch gekennzeichnet, dass** mindestens ein Lager aus einem eigenständigen Modul besteht.

3. Gasreibungspumpe nach Anspruch 2 **dadurch gekennzeichnet, dass** auch die Antriebseinrichtung (13) aus einem eigenständigen Modul besteht.

4. Gasreibungspumpe nach Anspruch 3 **dadurch gekennzeichnet, dass** mindestens zwei Lager in einem Modul zusammengefasst sind.

5. Gasreibungspumpe nach Anspruch 3 **dadurch gekennzeichnet, dass** mindestens ein Lager und die Antriebsmittel in einem Modul zusammengefasst sind

6. Gasreibungspumpe nach einem oder mehreren der Ansprüche 2 bis 5, **dadurch gekennzeichnet, dass** mindestens eines der Module mit dem zylindrischen Teil (7) des Pumpengehäuses in Eingriff gebracht und gesichert wird.

7. Gasreibungspumpe nach einem der vorhergehenden Ansprüche, **dadurch gekennzeichnet, dass** Dichtungsmittel (11) zwischen Gaslager und Gasauslassbereich (20) vorhanden sind.

## Claims

1. Gas friction pump with stationary active pumping components (6) and rotating active pumping components (5) which are fixed to a rotatable rotor shaft (4), wherein the rotor shaft (4) and the rotating active pumping components (5) are component parts of the rotor, and the rotor shaft (4) is supported by two spaced journal bearings (8, 9), one of which is fitted closer to the centre of gravity of the rotor than the other, and a thrust bearing (16), **characterised in that** only the journal bearing (9) which is located closer to the centre of gravity of the rotor is a gas bearing, while the other journal bearing (8) is a conventional bearing, and the bearings are disposed in a cylindrical part (7) of the pump casing.

2. Gas friction pump according to Claim 1, **characterised in that** at least one bearing consists of an independent module.

3. Gas friction pump according to Claim 2, **characterised in that** the drive device (13) also consists of an independent module.

4. Gas friction pump according to Claim 3, **characterised in that** at least two bearings are combined in a module.

5. Gas friction pump according to Claim 3, **characterised in that** at least one bearing and the drive means are combined in a module.

6. Gas friction pump according to any one or more of Claims 2 to 5, **characterised in that** at least one of the modules is brought into engagement with the cylindrical part (7) of the pump casing and secured.

7. Gas friction pump according to any one of the preceding Claims, **characterised in that** sealing means (11) are provided between the gas bearing and the gas outlet region (20).

## Revendications

1. Pompe à friction gazeuse comprenant des éléments immobiles (6) actifs en pompage et des éléments rotatifs (5) actifs en pompage, ces derniers étant fixés sur un arbre de rotor tournant (4), dans laquelle l'arbre de rotor (4) et les éléments rotatifs (5) actifs en pompage sont des constituants du rotor et dans laquelle l'arbre de rotor (4) est supporté par deux paliers radiaux (8, 9) espacés - dont l'un est agencé plus près du centre de gravité du rotor que l'autre - et par un palier axial (16), **caractérisée en ce que** seul le palier radial (9) se trouvant plus près du centre de gravité du rotor est un palier à gaz, tandis que l'autre palier radial (8) plus éloigné est un palier classique, et **en ce que** les paliers sont agencés dans une partie cylindrique (7) du corps de pompe.

2. Pompe à friction gazeuse selon la revendication 1, **caractérisée en ce qu'**au moins un palier est constitué d'un module autonome.

3. Pompe à friction gazeuse selon la revendication 2, **caractérisée en ce que** le dispositif d'entraînement (13) est également constitué d'un module autonome.

4. Pompe à friction gazeuse selon la revendication 3, **caractérisée en ce que** deux paliers au moins sont regroupés dans un module.

5. Pompe à friction gazeuse: selon la revendication 3, **caractérisée en ce qu'**au moins un palier ainsi que les moyens d'entraînement sont regroupés dans un module.

6. Pompe à friction gazeuse selon l'une quelconque ou plusieurs des revendications 2 à 5, **caractérisée en ce qu'**au moins un des modules est engagé et bloqué dans la partie cylindrique (7) du corps de pompe.

7. Pompe à friction gazeuse selon l'une quelconque des revendications précédentes, **caractérisée en ce que** des garnitures d'étanchéité (11) sont présentes entre le palier à gaz et la zone d'éjection de gaz (20).
